# EUROPEAN PATENT APPLICATION

(11) **EP 4 044 405 A1**
(43) Date of publication of application: **17.08.2022**
(21) Application number: 21000047.7
(22) Date of filing: 15.02.2021
(51) Int. Cl.: H02K 3/34

(54) **STATOR FOR AN ELECTRIC MACHINE**

(71) Applicant: MAHLE International GmbH, 70376 Stuttgart (DE)
(72) Inventor: Pahor-KOS, Vanja, SI - 1370 Logatec (SI); Berce, Mitja, SI - 5270 Ajdvscina (SI)

(57) **Abstract**

A stator (2) for an electric machine (1) comprises a stator core including a plurality of teeth (5) projecting radially inwards or radially outwards and forming slots (4) therebetween. A plurality of coils comprising coil wires (8) is arranged in the slots (4), whereby an insulation sheet (3) is provided in each respective slot for insulating the coil wires (8) from the stator core. The insulation sheet (3) includes a plurality of openings or perforations (10), whereby resin is provided in a space (9) between the coil wires (8) and between the coil wires (8) and the insulation sheet (3), and whereby the resin penetrates into the openings or perforations (10) of the insulation sheet (3).

## Description

### TECHNICAL FIELD

The invention relates to a stator according to the preamble of independent claim 1 and to an electric machine according to independent claim 14.

### BACKGROUND ART

An electric motor with slot insulation is disclosed in EP 1542338 A2. This describes a coil which is wrapped in a sheet of insulating paper arranged along an inner face profile of a slot of a stator core. Insulating resin is filled into the slot of the stator core. The insulation paper electrically insulates the coil wires from the stator core. The described invention aims to avoid voids forming in the resin in order to avoid electric charge concentration and dielectric breakdown.

### SUMMARY

The stator according to the invention as defined in claim 1 has the advantage over the prior art stators in that the relative movement of the coils with respect to the stator core is prevented or at least reduced.

Therefore a first aspect of the present invention provides a stator for an electric machine comprising, a stator core including a plurality of teeth projecting radially inwards or radially outwards and forming slots therebetween, a plurality of coils comprising coil wires arranged in the slots, whereby an insulation sheet is provided in each respective slot for insulating the coil wires from the stator core, the insulation sheet includes a plurality of openings or perforations, whereby resin is provided in a space between the coil wires and between the coil wires and the insulation sheet, and whereby the resin penetrates into the openings or perforations of the insulation sheet.

The stator can be for an electric machine with a rotor on the outside of the stator, so that the stator teeth project radially outwards, or for an electric machine with a rotor radially inside the stator, so that the stator teeth project radially inwards. The insulation sheet is provided in the slot between adjacent stator teeth to insulate the coils from the stator core which is typically made up of stacked layers of steel laminations. The insulation sheet can be folded to fit the shape or contour of the slot surface. The term "coil wires" can be understood to include wires, bars or hair pins.

The fact that the resin penetrates into the openings or perforations of the insulation sheet prevents the resin from slipping with respect to the insulation sheet as it positively locks with the insulation sheet. As the resin is also provided in the space between the coil wires and between the coil wires and the insulation it holds the stator windings is position with the insulation sheet, preventing or at least reducing relative movement of the coils with respect to the stator core.

Preventing relative movement of the coils with respect to the stator core is particularly important for applications where vibrations of the electrical machine are expected, for example in vehicles. Vibrations cause displacement of the complete stator winding in relation to the stator core and therefore in relation to other parts of the electric machine. The phase wires from the stator winding are connected to phase terminals of a rectifier bridge or to other electronic components, and displacement of the coils with respect to the stator core will thus cause mechanical stress in the phase wires and connections. Stress leads to strain and breaking, resulting in failure of electronic components and ultimately the electrical machine.

In a preferred embodiment the resin penetrates through the openings or perforations in the insulation sheet so that it is contact with the slot surface of the stator core. This enables the resin to adhere to the stator core directly.

The openings or perforations are arranged in a substantially planar portion of the insulation sheet, so that the resin can penetrate through the insulation sheet over a broad area of the insulation sheet.

The number and arrangement of openings or perforations can be chosen to enable the resin to wet substantially the whole surface of the stator core under the insulation sheet. In this way the resin can improve the adherence of the insulation sheet to the stator core in order to further reduce the risk of displacement of the coils.

In a preferred embodiment the area of the openings is in the range of 20%-60% of the overall sheet insulation area. In a more preferred embodiment, the area of the openings is in the range of 30%-50% of the overall sheet insulation area. It was found that in this range the insulation offered improved protection against partial discharge.

The insulation sheet itself can be impregnated with the resin so that voids can be avoided between the coils and the stator core. This improves the conduction of heat away from the coils through the resin towards the stator. The presence of voids also leads to high charge concentrations and dielectric breakdown.

The openings or perforations may be of circular shape. In a preferred embodiment however the openings or perforations have an elongated shape. This enables the insulation sheet to have different properties, e.g. regarding bendability, in different directions.

As the insulation sheet is folded to fit the shape of the slot, the elongated shape of the openings or perforations may be such that the dimension of the openings or perforations is longer in the axial direction of the stator then in a direction perpendicular thereto. As the stator slots extend in the axial direction the insulation sheet must be folded or curved around the axial axis, and the elongated shape of the openings or perforations enables the insulation sheet to be bent or curved more easily around this axis whilst maintaining sufficient rigidity in the other directions.

In an advantageous embodiment, openings or perforations can be additionally arranged along a folding line of the insulation sheet. This has the purpose of aiding the folding of the stator paper so it can be fitted more easily into the stator slot.

The insulation sheet can be a single layer insulating paper. This enables a low-cost design whilst guarding against displacement of the stator coils as discussed above.

Alternatively, the insulation sheet can be a paper and polyester film laminate, which enables an increased rigidity of the insulation sheet which makes the assembly of the sheet insulation into the slots and the subsequent insertion of the coils easier.

In a preferred embodiment the insulation sheet thickness is at least 0.15 mm. The inventors have recognized that the thickness of the insulation sheet determines how well it gets impregnated with resin, whereby thicker insulation sheets are more difficult to fully impregnate. The invention thus enables a larger thickness of insulation sheet to be used, and hence improving assembly and insulation properties, whilst maintaining full impregnation of the insulation sheet to the stator core surface.

A second aspect of the present invention provides electric machine, in particular a motor or a generator, comprising a stator according to one of the preceding claims, whereby the coils are connected to phase wires or pins which project generally axially from the stator and are connected to a phase connection terminal of a power electronics board.

### BRIEF DESCRIPTION OF THE DRAWINGS

Embodiments will now be described by way of example only with reference to the accompanying drawings, in which:
Figure 1 is a sectional side view of an electric machine comprising a stator according to the invention,
Figure 2 is a perspective view of a stator of an electric machine according to the invention,
Figure 3 is a schematic sectional view through a stator according to the invention
Figure 4 is a perspective view of part of a stator according to the invention
Figure 5 shows various embodiments of the insulation sheet according to the invention.

### DETAILED DESCRIPTION

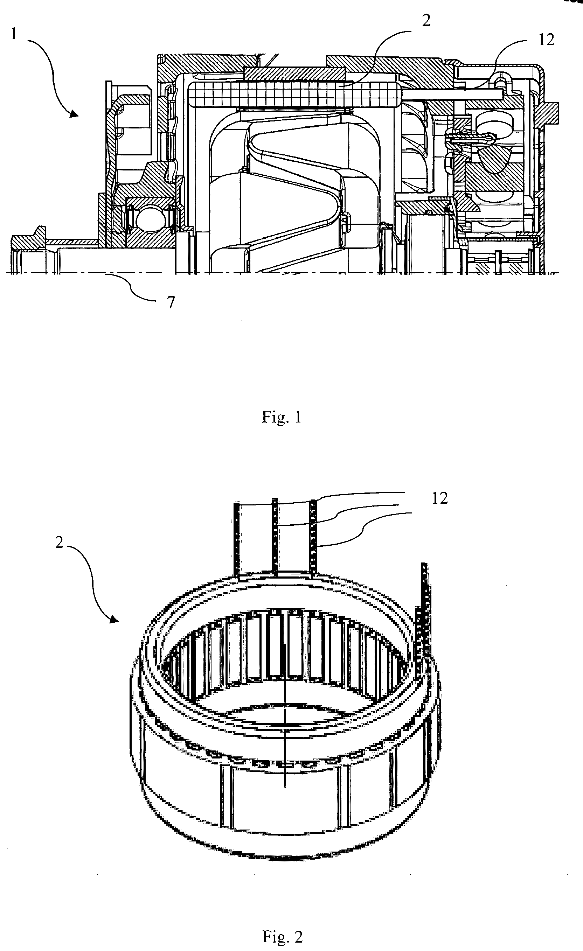

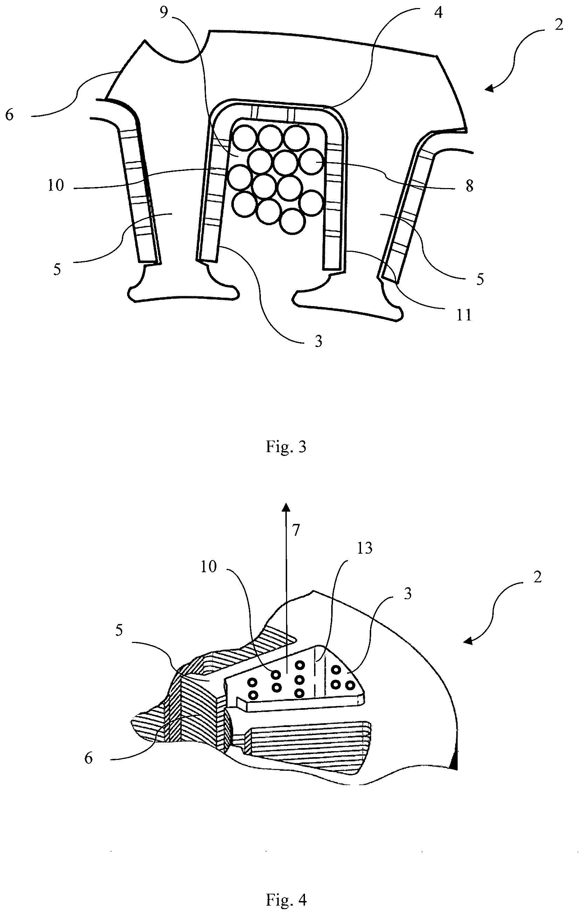

Figure 1 shows an electric machine 1, in this case an alternator, however the invention is applicable to any motor or generator comprising a stator. Referring now also to figures 2, 3 and 4, the electric machine 1 has a stator 2 comprising slots 4 extending in the axial direction 7 which receive the stator windings. Figure 3 shows a sectional view of part of the stator according to the invention, and figure 4 shows a perspective view of a part of the stator 2 before the stator coil has been inserted. As can be seen in figure 3 the stator core is made from a stack of steel laminations 6 as is known in the art.

An insulation sheet 3 is provided in each slot 4 formed between adjacent teeth 5 of the stator 2. The insulation sheet 3 is folded or bent to the shape of the slot 4 so that it lies against and follows the contour of the walls of the slot 4. The insulation sheet 3 can be an insulation paper or a laminate made from several layers comprising e.g. polyester and paper. After insertion of the insulation sheet 3 into the slot 4 the coils comprising coil wires 8 are arranged in the slots 4. The coil wires can be in the form of insulated wires or bars or hairpins. After the coil wires 8 are arranged in the slots, a resin (not shown) is introduced into the slots 4 filling the gaps 9 between the coil wires 8 and between the coil wires and the insulation sheet 3.

According to the invention openings or perforations 10 are provided in the insulation sheet 3 to allow the resin to penetrate through the insulation sheet 3 to the axially extending surface 11 of the stator slot 4, which is the edges of the laminate stack 6. By enabling the resin to flow into openings 10 of the insulation sheet 3 the resin, when cured, positively locks the coil wires 8 in place with respect to the insulation sheet 3. The resin also adheres to the slot surface 11 at least in the area of the openings or perforations 10. Therefore, a displacement of the stator coil with respect to the stator is prevented. Without the openings or perforations 10 in the insulation sheet 3 the cured resin holding the coil wires 8 can slip in the axial direction 7 with respect to the insulation sheet 3, due to the smooth surface of the insulation sheet.

Figures 1 and 2 show a stator according to the invention whereby the phase wires 12 of the coils project axially from an end of the stator. The phase wires 12 may be rigid pins or flexible wires and may contact phase terminals of a power electronics board (not shown). In an environment which is subject to vibrations, for example a vehicle traction motor or alternator, any movement of the coils relative to the stator will exert stress on these phase wires and can lead to strain and failure of the electrical connections. The solution of the invention prevents a relative movement of the coils 8 with respect to the stator 2.

The resin can impregnate the insulation sheet 3, so that the presence of voids in the stator slot is minimized. The openings or perforations 10 also improve the impregnation of the insulation sheet 3 on the side facing the surface 11 of the slot.

Figure 4 shows one embodiment of the openings or perforations 10 which consist of a plurality of circular openings arranged spaced over a substantial part of the insulation sheet 3, so that the resin can advantageously infiltrate between the insulation sheet 3 and the slot surface 11. These enables the resin to adhere to the slot surface 11 over a wider area and/or to improve the impregnation of the insulation sheet 3 with resin.

The number, dimensions and arrangement of openings or perforations 10 can vary depending on application, but their dimensions and number should be chosen to enable sufficient wetting of the slot surface 11 whilst maintaining an adequate rigidity of the insulation sheet 3 so that the insertion into the slots 4 is possible without problems and maintaining its primary function which is to electrically insulate the coils from the core.

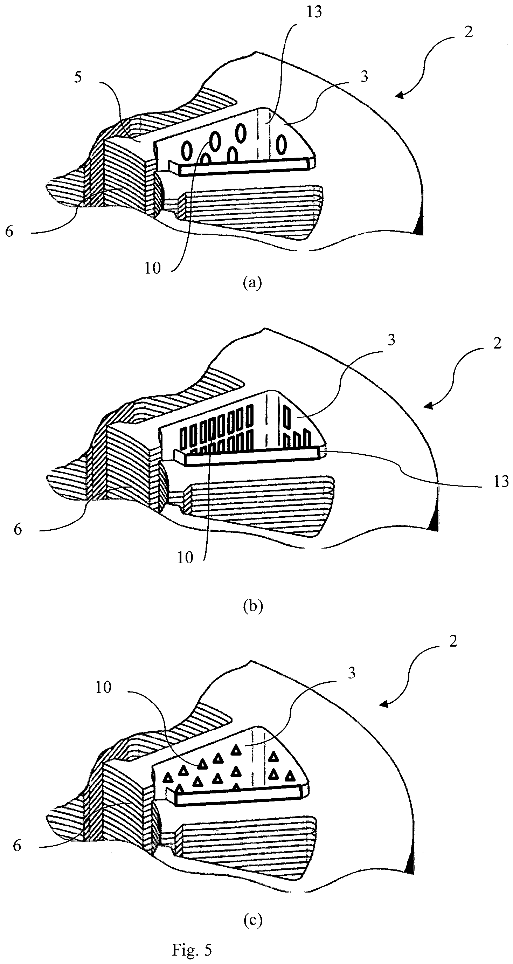

Figure 5a to 5c shows three different embodiments of the insulation sheet 3 according to the invention. As can be seen the openings or perforations 10 can have different shapes, including oval (Fig 5a), rectangular (Fig 5b) or triangular (Fig. 5c). The embodiments shown in figures 5a and 5b where the openings or perforations 10 having an elongated shape enables the insulation sheet 3 to have different properties, e.g. regarding bendability, in different directions. In these embodiments the dimension of the openings or perforations 10 is longer in the axial direction 7 of the stator 2 then in a direction perpendicular thereto. As the stator slots 4 extend in the axial direction the insulation sheet 3 must be folded or curved around the axial axis, and the elongated shape of the openings or perforations 10 enables the insulation sheet 3 to be bent or curved more easily around this axis whilst maintaining sufficient rigidity in the other directions.

Although not shown in the drawings, additional openings or perforations 10 can be arranged along a folding line 13 of the insulation sheet. This has the purpose of aiding the folding of the stator paper so it can be fitted more easily into the stator slot.

### LIST OF REFERENCE NUMERALS

- 1.: Electric machine
- 2.: Stator
- 3.: Insulation sheet
- 4.: Stator slot
- 5.: Stator teeth
- 6.: Laminate stack /stator core
- 7.: Axial direction
- 8.: Coil wire
- 9.: Gaps
- 10.: Openings or perforations
- 11.: Slot surface
- 12.: Phase wires
- 13.: Folding line

## Claims

1. A stator (2) for an electric machine (1) comprising,
a stator core including a plurality of teeth (5) projecting radially inwards or radially outwards and forming slots (4) therebetween,
a plurality of coils comprising coil wires (8) arranged in the slots (4), whereby an insulation sheet (3) is provided in each respective slot (4) for insulating the coil wires (8) from the stator core (6),
the insulation sheet (3) includes a plurality of openings or perforations (10),
whereby resin is provided in a space (9) between the coil wires (8) and between the coil wires (8) and the insulation sheet (3), and whereby the resin penetrates into the openings or perforations (10) of the insulation sheet (3).

2. A stator (2) according to claim 1, **characterized in that** the resin penetrates through the openings or perforations (10) in the insulation sheet (3) so that it is contact with the slot surface (11) of the stator core.

3. A stator (2) according to claims 1 or 2, **characterized in that** the openings or perforations (10) are arranged in a substantially planar portion of the insulation sheet (3).

4. A stator (2) according to one of the preceding claims, **characterized in that** the number and arrangement of openings or perforations (10) are sufficient to enable the resin to wet the surface (11) of the stator core under the insulation sheet (3).

5. A stator (2) according to one of the preceding claims, **characterized in that** the insulation sheet (3) is impregnated with the resin.

6. A stator (2) according to one of the preceding claims, **characterized in that** the openings or perforations (10) are elongated.

7. A stator (2) according to claim 6, **characterized in that** the elongated openings or perforations (10) have a larger dimension in the axial direction (7) of the stator (2).

8. A stator (2) according to one of the preceding claims, **characterized in that** openings or perforations (10) are additionally arranged along a folding line (13) of the insulation sheet (3).

9. A stator (2) according to one of the preceding claims, **characterized in that** the insulation sheet (3) is a single layer insulating paper.

10. A stator (2) according to one of claims 1 to 8, **characterized in that** the insulation sheet (3) is a paper and polyester film laminate.

11. A stator (2) according to one of the preceding claims, **characterized in that** the insulation sheet (3) has a thickness of at least 0.15mm.

12. A stator (2) according to one of the preceding claims, **characterized in that** the insulation sheet (3) is folded to fit the contour of the stator slot surface (11).

13. A stator (2) according to one of the preceding claims, whereby the area of the openings is in the range of 20%-60%, and preferably in the range of 30%-50%, of the overall sheet insulation area.

14. An electric machine (1), in particular a motor or a generator, comprising a stator (2) according to one of the preceding claims, whereby the coils are connected to phase wires or pins (12) which project generally axially (7) from the stator (2) and are connected to a phase connection terminal of a power electronics board.
